# EUROPEAN PATENT SPECIFICATION

(11) **EP 0 928 917 B1**
(45) Date of publication and mention of the grant of the patent: **24.04.2002**
(21) Application number: 98100285.0
(22) Date of filing: 09.01.1998
(51) Int. Cl.: F16K 7/17, F16K 7/12

(54) **Diaphragm for valves**
Ventilmembran
Diaphragme pour soupapes

(43) Date of publication of application: 14.07.1999
(73) Proprietor: Raphael Valves Industries (1997) Ltd., Or Akiva (IL)
(72) Inventor: Frenkel, Boris, 42320 Israel (IL)
(74) Representative: Modiano, Guido, Dr.-Ing.

(56) References cited:
- FR-A- 1 313 975
- US-A- 2 302 930
- US-A- 3 083 943
- US-A- 3 779 274
- US-A- 5 335 584
- US-A- 5 349 896

## Description

### Field of Invention

The invention relates to hydraulic valves, and more particularly to diaphragm valves. The subject matter of this application being an improved diaphragm, such valves are widely used in water supplying systems, pipe lines conveying oil gas and any other liquids. The generally known types of such valves usually comprise a dished, elastic diaphragm constituted by an elastic, dished circular disc some part of which has cylindrical, conical or spherical form.

The diaphragm in such valves is moved to an end position either forcefully (piston-cylinder), or by pressure effect, or by specially installed spring. When pressure is terminated, the diaphragm returns to an initial position by spring. The use of spring and auxiliary parts providing stability of spring action is disadvantage of this structure.

There are various types of diaphragm which differ by design, shape and size, but, in general, principle of their structure and action is the same as those described above. U.S. Patent 2302930 relates to a valve diaphragm however of different construction.

The diaphragm returns to lower position when no pressure is over it, by a spring inserted within hermetically sealed space formed between cover and the diaphragm. If this spring were not inserted, the upper position of the diaphragm (a state when no pressure is over it) would be unstable. Namely, return of the diaphragm to lower position cannot be guaranteed.

A diaphragm according to the preamble of claim 1 is known from FR-A-1313975.

### Object of the Invention

It is the main object of the present invention to provide a novel diaphragm which would return to its initial position without the use of a spring.

The above task is achieved by means of the construction of the diaphragm according to claim 1.

### Short Description of Drawings

The invention will now be described in detail having reference to the accompanying drawings which exemplify an embodiment of the new diaphragm.

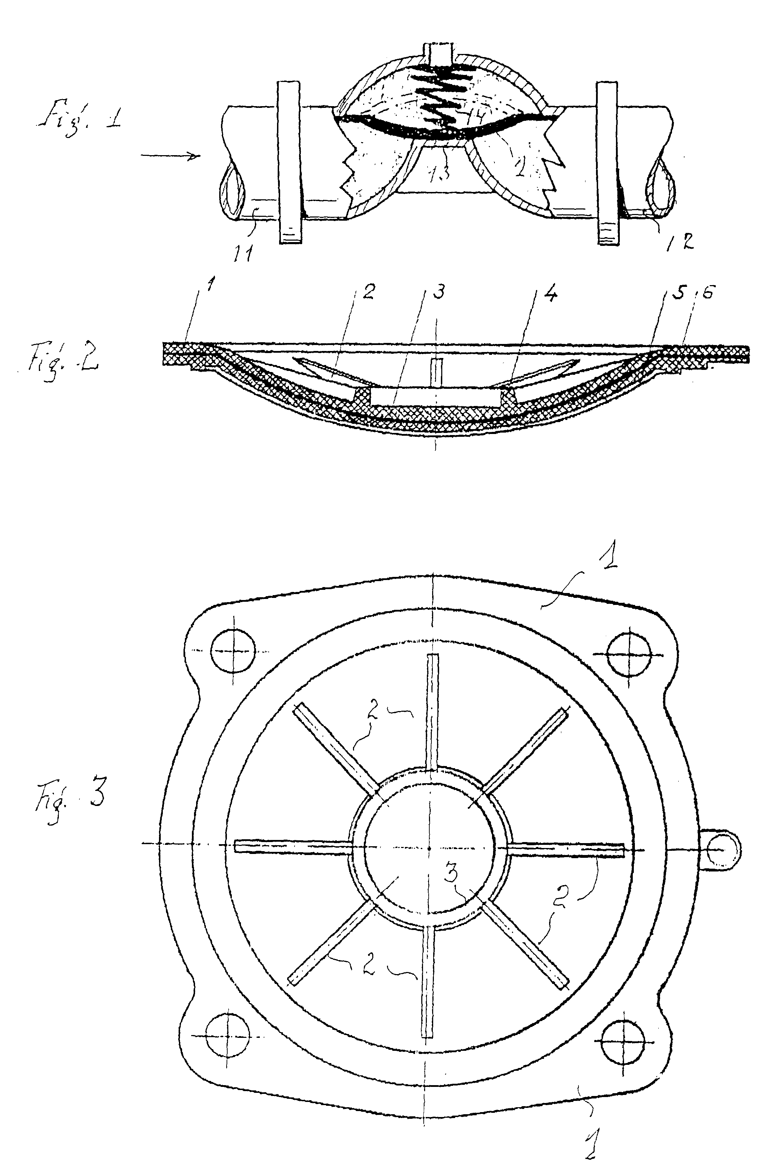

In the drawings **Figure 1** illustrates the state of art, as hitherto known.
**Fig. 2** shows the new diaphragm in a sectional view in closing position,
**Fig. 3** is a top, plan view of the diaphragm.
**Fig. 4** illustrates the opposite side of the diaphragm.
**Fig. 5** is a cross section of Figure 4.

### Detailed Description of Preferred Embodiment

Turning first to **Figure 1,** the conventional chest **10** is interposed between the ends of consecutive sections **11, 12** of a pipe line - within the chest **10** is located the diaphragm **1** depicted by a fat line indicating its closing position on the seat **13.** The open position of the diaphragm is shown in a broken line 1'. A spatial helix spring **14** initiates and/or assists the movement of diaphragm **1** from open to closing position.

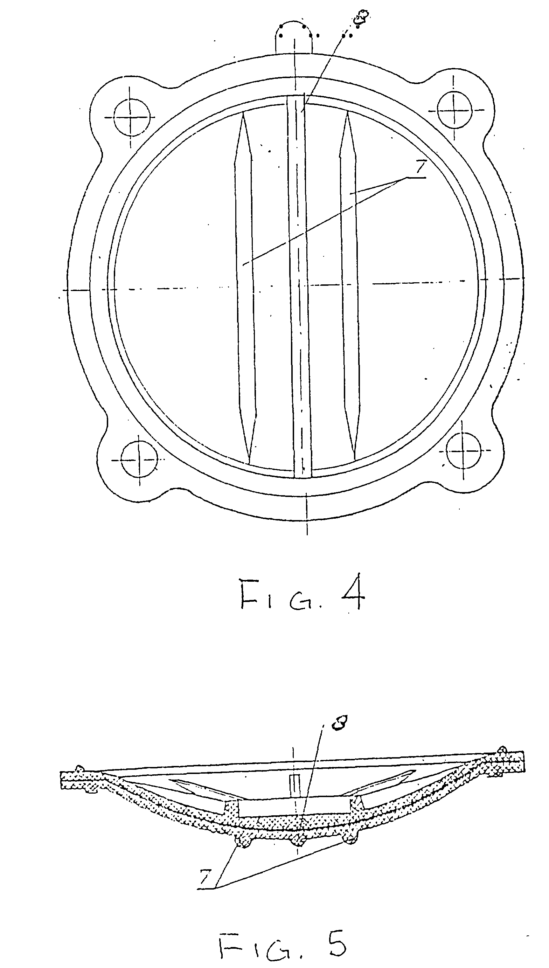

Turning to **Fig. 2** the new diaphragm indicated as a whole by reference numeral **1** is composed of two layers **5** and **6** of elastic material forming together a dished, circular body.

On the upper, (non-closing) surface of the diaphragm **1** are provided a number (in the example shown eight) diametrically extending ribs **2** which form a spider like design (see Fig. 2). In the centre of the dished diaphragm **1** is located a circular ring shaped ridge **3** which intersects all ribs **2.**

As can be seen in **Fig. 4** on the opposite side of diaphragm **1** there are provided longitudinal protrusions **7** (ribs) at both sides of sealing rib **8** and parallel thereto, said protrusions are noise dampers and reduce vibration.

In practice the diaphragm which shuts off the passage of water (or other liquid) through the valve is put into closing position in the conventional way, either manually using generally known arrangements, or automatically also generally known and practiced. In order to reverse the closing position of the diaphragm into the open position indicated by broken lines in **Fig. 1** no initiating or assisting actions by a spring, as hitherto employed, is required. Whenever the action of factors, such as cessation of pressure of the flow of liquid through the valves ceases, the movement of the diaphragm from the open position shown in broken lines in **Fig. 1** to that depicted by a full line is automatically effected due to the combined tendency of ribs **2** and ridge **3** (or ridges **3,** if more than one) to revert to the "closed" position indicated by the full line.

Spring characteristics of the diaphragm depend upon the number and size of radial and circular ribs. Enlarged force developed by the diaphragm may be provided by increased number and size (height, width, length) of ribs.

Noise suppression by ribs **7** is achieved as follows:
When the flow rate of liquid passing through the cock is regulated, the gap between sealing rib **8** and seat **13** of the cock may be reduced to the range from 0.5-1.5mm. The flow rate increases considerably in this insignificant gap which results in a strong unpleasant noise during cock operation.

Unlike long-standing diaphragm cock, ribs **7** that are positioned in front and behind said gap form an eddy flow in this zone which suppresses noise during cock operation.
Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A diaphragm (1) for use in diaphragm valves, wherein the diaphragm (1) is constituted by a circular disc (5, 6) of elastic material which on its surface, which is opposite the surface of contact with the valve seat in closing position, has a number of ribs (2) forming a spider design, at least one circular ridge (3) being provided at the center of the diaphragm (1) intersecting all the ribs (2), **characterized in that** the circular disc (5, 6) is dished, the ribs (2) and the at least one circular ridge (3) being adapted to bias the diaphragm (1).

2. The diaphragm of claim 1, **characterized in that** the diaphragm (1) has a multiple number of concentric ridges (3) on one of its surfaces.

3. The diaphragm of claims 1 or 2, **characterized in that** the diaphragm (1) is provided on the surface of contact with the valve seat in closing position with a plurality of longitudinal ribs (7) and a sealing rib (8) parallel to the plurality longitudinal ribs (7).

4. A diaphragm valve containing the diaphragm of one or more of claims 1-3.

## Patentansprüche

1. Eine Membran (1) zur Verwendung in einem Membranventil, wobei die Membran (1) aus einer kreisförmigen Scheibe (5, 6) besteht, die aus einem elastischen Material ausgebildet ist, das an seiner Oberfläche, die der Kontaktfläche mit den Ventilsitz in der Schließstellung gegenüberliegt, eine Anzahl von Rippen (2) aufweist, die eine Spinnenform haben, wobei mindestens eine kreisförmige Rille (3), die alle Rippen (2) durchschneidet, in der Mitte der Membran (1) bereitgestellt wird, **dadurch gekennzeichnet, dass** die kreisförmige Scheibe (5, 6) gewölbt ist, wobei die Rippen (2) und die mindestens eine kreisförmige Rille (3) ausgebildet sind, um die Membran (1) vorzubelasten.

2. Die Membran nach Anspruch 1, **dadurch gekennzeichnet, dass** die Membran (1) eine Vielzahl von konzentrischen Rillen (3) an ihrer Oberflächen aufweist.

3. Die Membran nach Anspruch 1 oder 2, **dadurch gekennzeichnet, dass** die Membran (1) an der Kontaktfläche mit dem Ventilsitz in der Schließstellung mit einer Vielzahl von Längsrippen (7) und einer Dichtungsrippe (8) ausgestattet ist, die sich parallel zur Vielzahl von Längsrippen (7) erstrecken.

4. Das Membranventil, das die Membran nach einem oder mehreren der Ansprüche 1 bis 3 umfasst.

## Revendications

1. Diaphragme (1) à utiliser dans des soupapes à diaphragme, dans lequel le diaphragme (1) est constitué par un disque circulaire (5, 6) en matière élastique qui, sur sa surface qui est opposée à la surface de contact avec le siège de soupape en position de fermeture, possède plusieurs nervures (2) formant un motif en araignée, au moins une arête circulaire (3) étant prévue au centre du diaphragme (1), venant en intersection avec toutes les nervures (2), **caractérisé en ce que** le disque circulaire (5, 6) est embouti, les nervures (2) et l'au moins une arête circulaire (3) étant adaptées pour solliciter le diaphragme (1).

2. Diaphragme selon la revendication 1, **caractérisé en ce que** le diaphragme (1) possède un grand nombre d'arêtes concentriques (3) sur l'une de ses surfaces.

3. Diaphragme selon les revendications 1 ou 2, **caractérisé en ce que** le diaphragme (1) est prévu sur la surface de contact avec le siège de soupape en position de fermeture avec une pluralité de nervures longitudinales (7) et une nervure d'étanchéité (8) parallèle à la pluralité de nervures longitudinales (7).

4. Soupape à diaphragme contenant le diaphragme de l'une ou plusieurs des revendications 1 à 3.
